# EUROPÄISCHE PATENTSCHRIFT

(11) **EP 4 520 150 B1**
(45) Veröffentlichungstag und Bekanntmachung des Hinweises auf die Patenterteilung: **01.04.2026**
(21) Anmeldenummer: 24401019.5
(22) Anmeldetag: 19.08.2024
(51) Int. Cl.: A01B 39/18, A01M 21/02, A01B 49/02

(54) **BODENBEARBEITUNGSGERÄT**
SOIL WORKING APPARATUS
APPAREIL DE TRAVAIL DU SOL

(30) Priorität: 08.09.2023 DE 102023124220
(43) Veröffentlichungstag der Anmeldung: 12.03.2025
(73) Patentinhaber: Amazonen-Werke H. Dreyer SE & Co. KG, 49205 Hasbergen (DE)
(72) Erfinder: Johannaber, Stefan Jan, 49205 Hasbergen (DE); Breuer, Jan Henrik, 49205 Hasbergen (DE); Kubut, Oliver, 49205 Hasbergen (DE)

(56) Entgegenhaltungen:
- EP-A1- 3 679 774
- WO-A1-2023/104245
- DE-B3- 102022 113 040
- SE-B- 405 062

## Beschreibung

Die vorliegende Erfindung betrifft ein Bodenbearbeitungsgerät zur Bodenbearbeitung zwischen in Pflanzreihen angebauten Nutzpflanzen mit mehreren an einem Werkzeugrahmen angeordneten, entlang einer Bearbeitungsrichtung zwischen den Pflanzreihen in den Boden eingreifenden Bodenbearbeitungswerkzeugen, wobei der Werkzeugrahmen über mehrere Tiefenführungsrollen gegenüber dem Boden abgestützt ist und die Tiefenführungsrollen zum Ausgleich von Bodenunebenheiten gegenüber dem Werkzeugrahmen verschwenkbar angeordnet sind.

Bodenbearbeitungsgeräte kommen in der Landwirtschaft in verschiedensten Ausführungsformen für unterschiedliche Anwendungsfälle zum Einsatz. Hierzu zählen insbesondere die mechanische Einebnung, Lockerung oder Verfeinerung des Bodens der jeweiligen Nutzfläche oder auch das Einarbeiten von organischem Material, wie Unkraut oder Ernterückständen, in den Boden. Die Bodenbearbeitungsgeräte können dabei insbesondere an die Beschaffenheit der Nutzfläche, den jeweiligen Zeitpunkt in der Vegetationsperiode oder die Art der angebauten Nutzpflanzen angepasst sein.

Insbesondere solche Nutzpflanzen, die üblicherweise in voneinander beabstandet verlaufenden Pflanzreihen angebaut werden, wie etwa Mais, Rüben, Kartoffeln oder Feldgemüse, erfordern in der Regel spezielle Bodenbearbeitungsgeräte. Solche Bodenbearbeitungsgeräte weisen üblicherweise an einem gemeinsamen Werkzeugrahmen mehrere, beabstandet voneinander angeordnete Bodenbearbeitungswerkzeuge auf. Die Anordnung der Bodenbearbeitungswerkzeuge ist dabei in der Regel so gewählt, dass die Nutzpflanzen bei der Bodenbearbeitung nicht beschädigt werden. Üblicherweise kommen bei solchen Bodenbearbeitungsgeräten je nach Anwendungsfall messer-, meißel-, zinken- oder scharartige Bodenbearbeitungswerkzeuge zum Einsatz, welche zwischen den Pflanzreihen in den Boden der Nutzfläche eingreifen.

Solche Bodenbearbeitungsgeräte werden üblicherweise entlang einer Bearbeitungsrichtung, welche typischerweise der Ausrichtung der Pflanzreihen entspricht, von Traktoren oder ähnlichen Zugmaschinen über die Nutzfläche gezogen oder sind alternativ selbstfahrend, mitunter auch automatisch oder sogar autonom selbstfahrend, ausgebildet. Zur Abstützung des Werkzeugrahmens gegenüber dem Boden weisen solche Bodenbearbeitungsgeräte in der Regel mehrere Rollen auf, welche in Bearbeitungsrichtung über den Boden der Nutzfläche rollen. Da über die Rollenabstützung in der Regel eine Führung des Werkzeugrahmens gegenüber der Nutzfläche erreicht wird, werden die Rollen in der Praxis als Tiefenführungsrollen bezeichnet.

Da insbesondere bei unebenen, beispielsweise steinigen Nutzflächen mitunter starke Erschütterungen über die Tiefenführungsrollen auf den Werkzeugrahmen übertragen werden, welche einerseits zu einer ungleichmäßigen Bodenbearbeitung und andererseits sogar zu Beschädigungen an den Bodenbearbeitungswerkzeugen oder sonstigen Komponenten des Bodenbearbeitungsgeräts führen können, hat es sich in der landwirtschaftlichen Praxis als vorteilhaft herausgestellt, die Tiefenführungsrollen nicht starr, sondern gegenüber dem Werkzeugrahmen verschwenkbar anzuordnen. Durch eine solche Anordnung lassen sich kleinere Bodenunebenheiten in der Regel zuverlässig ausgleichen.

Allerdings hat es sich bei solchen Bodenbearbeitungsgeräten unter besonders widrigen Bodenverhältnissen, insbesondere bei größeren Niveauunterschieden zwischen den verschiedenen Tiefenführungsrollen, als nachteilig herausgestellt, dass benachbarte Tiefenführungsrollen aufgrund der Ausgleichsbewegungen der anderen Tiefenführungsrollen den Kontakt zum Boden verlieren können. Hieraus kann im Extremfall eine instabile Fahrlage des Bodenbearbeitungsgeräts resultieren, welche sich negativ auf die Bodenbearbeitung auswirken kann. Das Dokument DE 10 2022 113040 B3 offenbart ein bekanntes Bodenbearbeitungsgerät zur Bodenbearbeitung zwischen in Pflanzreihen angebauten Nutzpflanzen.

Vor diesem Hintergrund stellt sich die Erfindung die **Aufgabe**, ein Bodenbearbeitungsgerät anzugeben, welches einen Ausgleich von Bodenunebenheiten erlaubt und bei welchem zugleich eine instabile Fahrlage zuverlässig vermieden kann.

Diese Aufgabe wird bei einem Bodenbearbeitungsgerät der eingangs genannten Art durch die Merkmale des Patentanspruchs 1 **gelöst**. Vorteilhafte Weiterbildungen sind in den abhängigen Unteransprüchen angeben.

Zwei benachbarte Tiefenführungsrollen sind über einen Wipphebel mechanisch miteinander gekoppelt und gegenüber dem Werkzeugrahmen pendelnd angeordnet. Eine solche Ausgestaltung ermöglicht dem Bodenbearbeitungsgerät eine stabile Fahrlage, bei welcher ein Verlust des Bodenkontakts durch die Tiefenführungsrollen zuverlässig vermieden werden kann. Es resultiert eine gleichmäßigere Bodenbearbeitung.

Eine vorteilhafte Weiterbildung der Erfindung sieht vor, dass die Tiefenführungsrollen zur Kompensation von Bodenunebenheiten um eine sich quer zur Bearbeitungsrichtung erstreckende Schwenkachse schwenkbar an dem Werkzeugrahmen befestigt sind. Eine solche Ausgestaltung ermöglicht den Ausgleich von Bodenunebenheiten. Insbesondere können Bodenniveauunterschiede quer zu der Bearbeitungsrichtung ausgeglichen werden.

Es hat sich als vorteilhaft herausgestellt, wenn der Wipphebel als zweiseitiger Hebel ausgebildet ist, welcher um eine sich quer zu der Schwenkachse erstreckende Wippachse pendelnd gelagert ist. Es ergibt sich eine kinematisch vorteilhafte Pendellagerung, welche einen Ausgleich der Niveaus der beiden gekoppelten Tiefenführungsrollen erlaubt. Besonders bevorzugt ist in diesem Zusammenhang, wenn der Wipphebel nach Art eines Kipphebels ausgebildet ist, dessen beiden Seiten im Wesentlichen gleichlang ausgeführt sind. Ferner kann es vorteilhaft sein, wenn die Wippachse durch den Mittelpunkt des Wipphebels verläuft. Alternativ kann die Wippachse sich auch im Wesentlichen in Bearbeitungsrichtung erstrecken. Des Weiteren hat es sich als vorteilhaft erwiesen, wenn die Wippachse in der vertikalen Bearbeitungsebene liegt, welche sich senkrecht durch die Bearbeitungsrichtung erstreckt. Für gewisse Anwendungsfälle kann es auch bevorzugt sein, wenn zwischen der Wippachse und der Bearbeitungsrichtung ein Winkel, vorzugsweise ein spitzer Winkel, eingeschlossen ist. Überdies sind auch andere Anordnungen der Wippachse relativ zu der Bearbeitungsrichtung denkbar.

In diesem Zusammenhang wird ferner vorgeschlagen, dass sich der Wipphebel in einer Neutralstellung im Wesentlichen in Richtung der Schwenkachse, insbesondere parallel zur Schwenkachse, erstreckt. Eine solche Anordnung erlaubt einen gleichmäßigen Ausgleich von unebenen Bodenverhältnissen in beide Pendelrichtungen ohne Vorzugsrichtung. Insbesondere kann sich die Schwenkachse im Wesentlichen parallel zu einer Bodenebene erstrecken. Es ist jedoch auch denkbar, dass sich der Wipphebel in der Neutralstellung schräg zur Schwenkachse ausgerichtet ist.

In einer vorteilhaften Ausgestaltung sind die Tiefenführungsrollen jeweils an einem um die Schwenkachse schwenkbaren Längslenker befestigt. Es ergibt sich eine zuverlässige Aufhängung der Tiefenführungsrollen, welche sowohl eine effektive Führung der Tiefenführungsrollen in Längsrichtung als auch eine kinematisch einfache Schwenkbewegung der Tiefenführungsrollen um die Schwenkachse ermöglicht. Vorteilhafterweise können die Längslenker sich zwischen der Schwenkachse und der Nabe der jeweiligen Tiefenführungsrolle erstrecken.

In diesem Zusammenhang wird vorgeschlagen, dass der Längslenker eine Buchse aufweist, welche um ein sich in Richtung der Schwenkachse erstreckendes Achselement drehbar gelagert ist. Die Buchse ermöglicht eine kinematisch vorteilhafte, torsionsfreie Schwenkbewegung des Längslenkers um das Achselement. Bevorzugt ist, wenn das Achselement profilartig, insbesondere als Hohlprofil, ausgebildet ist.

Es hat sich ferner als vorteilhaft erwiesen, wenn der Wipphebel mit den Längslenkern gekoppelt ist. Über die Kopplung mit den Längslenkern kann die Pendelbewegung des Wipphebels auf einfache Art und Weise auf die Längslenker übertragen werden. Es resultiert ein kinematisch überschaubarer, wartungsfreundlicher Aufbau.

In diesem Zusammenhang wird vorgeschlagen, dass der Wipphebel zwei sich radial zur Wippachse erstreckende Führungsausnehmungen zur Führung je-weils eines, insbesondere korrespondierenden, Führungsvorsprungs der Längslenker aufweist. Die Führungsvorsprünge können durch die Führungsausnehmungen zumindest teilweise formschlüssig aufgenommen sein, wodurch sich eine sichere Führung ergeben kann. Eine solche Ausgestaltung ermöglicht dem Wipphebel gleichmäßige und verkantungsfreie Pendelbewegungen. Bevorzugterweise können die Führungsausnehmungen als Rücksprünge, bspw. als taschenartige Rücksprünge, in dem Wipphebel ausgebildet sein. Über die Gestaltung der Führungsausnehmungen und/oder der Führungsvorsprünge lässt sich der Bewegungsspielraum des Wipphebels, und damit auch das Ausmaß der Schwenkbewegungen der beiden damit gekoppelten Längslenker, begrenzen.

Aus konstruktiver Sicht ist es bevorzugt, wenn die Führungsvorsprünge nasenartig, insbesondere nasenartig mit rechteckigem Querschnitt, ausgebildet sind. Eine solche Ausgestaltung der Führungsvorsprünge als nasenartige Projektionen erlaubt eine robuste und fehlerunanfällige Führung der Längslenker. Insbesondere können sich die Führungsvorsprünge nasenartig in der Ebene eines flachen Längslenkers erstrecken.

Eine weitere konstruktiv vorteilhafte Ausführungsform zeichnet sich dadurch aus, dass die Führungsausnehmungen als im Wesentlichen rechteckige Aussparungen ausgebildet sind, welche sich in der Neutralstellung entlang der Schwenkachse erstrecken. In Kombination mit einem rechteckigen Führungsvorsprung ergibt sich eine effektive Führung der Längslenker bei den Pendelbewegungen. Es hat sich als besonders vorteilhaft erwiesen, wenn sich in der Neutralstellung die rechteckigen Aussparungen mit ihren längeren Kanten entlang der Schwenkachse erstrecken.

Es wird ferner vorgeschlagen, dass die Längslenker zur Einstellung einer Spurweite der Tiefenführungsrollen entlang der Schwenkachse relativ zu dem Achselement bewegbar sind. Eine solche Ausgestaltung ermöglicht eine bedienerfreundliche, zeitsparende Einstellung der Spurweite der Tiefenführungsrollen. In einer bevorzugten Ausgestaltung können die Längslenker entlang der Schwenkachse auf einfache Art und Weise verschiebbar angeordnet sein. Insbesondere können zwei benachbarte Tiefenführungsrollen zur Erhöhung der Spurweite voneinander weg und/oder zur Verringerung der Spurweite aufeinander zu bewegbar sein. Es ist von Vorteil, dass sich die Spurweite auf diese Weise auf die Breite der jeweiligen Pflanzreihe R und/oder den Abstand zwischen den Pflanzreihen R anpassen lässt.

Des Weiteren ist es bevorzugt, wenn die mit den Führungsvorsprüngen zusammenwirkenden Führungsausnehmungen als Führungen bei der Einstellung der Spurweite dienen. Es ergibt sich eine bedienerfreundlich gute Führung der Längslenker bei der Einstellung der Spurweite. Ferner resultiert aus einer solchen Ausgestaltung eine vorteilhafte Doppelfunktion der Führungsausnehmungen.

Ferner hat es sich als vorteilhaft erweisen, wenn die Buchse mit einem Arretierelement entlang der Schwenkachse axial unbeweglich und zugleich um die Schwenkachse drehbar an dem Achselement arretierbar ist. Hierdurch kann einerseits sichergestellt werden, dass sich die Spurweite nicht ungewollt ändert und andererseits dennoch ein effektiver Ausgleich von Bodenunebenheiten über die Schwenkbewegungen der Längslenker erreicht werden kann. Das Arretierelement kann bspw. als Splint oder als Federstecker ausgebildet sein.

In diesem Zusammenhang ist es bevorzugt, dass die Buchse zur Einstellung der Spurweite in verschiedenen Arretierstellungen an dem Achselement arretierbar ist. Es ergibt sich eine bedienerfreundliche Ausgestaltung, bei welcher verschiedene Spurweiten auf einfache Art und Weise eingestellt werden können. Die einzelnen Spurweiten, welche durch das Lochmuster vorgegeben sind, können wiederholgenau eingestellt werden. Zudem kann über die Arretierung sichergestellt werden, dass die eingestellten Spurweiten sich nicht während der Bodenbearbeitung verstellen, bspw. infolge von Erschütterungen oder Vibrationen.

Konstruktiv vorteilhaft ist es in diesem Zusammenhang, wenn die Arretierstellungen durch ein an dem Achselement angeordnetes Lochmuster vorgegeben sind. Ein solches Lochmuster erlaubt eine bedienerfreundliche, fehlerunanfällige Einstellung unterschiedlicher Spurweiten. Zudem hat sich eine solche Ausgestaltung als vergleichsweise unempfindlich gegenüber Umwelteinflüssen, wie Staub und Verschmutzungen, erwiesen, so dass selbst unter widrigen Umgebungsbedingungen eine wiederholgenaue, exakte Einstellung der Spurweiten ermöglicht werden kann. Es kann vorteilhaft sein, wenn der Durchmesser der Bohrungen des Lochmusters auf den Durchmesser des stiftartigen Arretierelements angepasst ist.

Ferner wird vorgeschlagen, dass die Buchse einen mit dem Arretierelement zusammenwirkenden Schwenkanschlag zur Begrenzung der Schwenkbewegungen des Längslenkers aufweist. Übermäßige Schwenkbewegungen des Längslenkers lassen sich durch eine solche Ausgestaltung vermeiden. Es ergibt sich zugleich eine vorteilhafte Doppelfunktion für das Arretierelement, welches nicht nur die eingestellte Spurweite fixiert, sondern auch den Schwenkwinkel der Längslenker. Konstruktiv hat es sich in diesem Zusammenhang als vorteilhaft herausgestellt, wenn der Schwenkanschlag am Ende einer nut- oder taschenartigen Ausnehmung in der Buchse ausgebildet ist. In dieser Ausnehmung kann das Arretierelement geführt sein.

Eine konstruktiv vorteilhafte Ausführungsform sieht vor, dass die Längslenker als mehrfach abgewinkelte Elemente ausgebildet sind. Insbesondere können die Längslenker als Blechformteile ausgebildet sein.

Eine weitere vorteilhafte Weiterbildung der Erfindung sieht vor, dass das Achselement an einem Tragarm angeordnet ist. Ein solcher Tragarm kann insbesondere eine tragfähige Verbindung zu dem Werkzeugrahmen sicherstellen. Bevorzugt ist eine Ausgestaltung, bei welcher der Tragarm als einseitig am Werkzeugrahmen angelenkter Träger ausgebildet ist. Das Achselement kann vorzugsweise durch eine Bohrung am Tragarm gesteckt sein, so dass beidseitig des Tragarms ein Segment des Achselements angeordnet ist, welches mit jeweils einem Längslenker gekoppelt sein kann.

Konstruktiv bevorzugt ist es in diesem Zusammenhang, wenn der Tragarm als Doppelprofil ausgebildet ist. Es ergibt sich eine gleichsam stabile wie gewichtssparende Ausgestaltung.

Es wird ferner vorgeschlagen, dass der Wipphebel in der Neutralstellung parallel zu dem Achselement angeordnet ist. Eine solche Ausgestaltung erlaubt kinematisch einfache, symmetrische Pendelbewegungen. Insbesondere kann der Wipphebel über ein Drehlager an dem Achselement angeordnet sein.

Des Weiteren hat es sich als vorteilhaft herausgestellt, wenn die Tiefenführungsrollen in Bearbeitungsrichtung vor den Bodenbearbeitungswerkzeugen angeordnet sind. Eine solche Anordnung erlaubt eine stabile Führung des Werkzeugrahmens. Ferner kann eine vergleichsweise kompakte Bauweise des Bodenbearbeitungsgeräts ermöglicht werden. Alternativ können die Tiefenführungsrollen jedoch auch hinter den Bodenbearbeitungswerkzeugen angeordnet sein, wenn dies im jeweiligen Anwendungsfall günstig ist.

In einer weiteren, konstruktiv vorteilhaften Weiterbildung der Erfindung wird vorgeschlagen, dass jeweils zwei Tiefenführungsrollen über eine gemeinsame Radaufhängung an dem Werkzeugrahmen angeordnet sind. Benachbarte, pendelnd angeordnete Tiefenführungsrollen können bei einer solchen Ausgestaltung auf vorteilhafte Weise gemeinsam mit dem Werkzeugrahmen verbunden sein. Alternativ können auch mehr oder weniger Tiefenführungsrollen über eine gemeinsame Radaufhängung an dem Werkzeugrahmen angeordnet sein.

Darüber hinaus hat es sich als konstruktiv vorteilhaft erwiesen, wenn sich die Radaufhängung schräg zur Vertikalen erstreckt. Eine solche Anordnung ermöglicht eine günstige Krafteinleitung in den Werkzeugrahmen. Insbesondere kann sich der Tragarm schräg zur Vertikalen erstrecken. Bevorzugt ist eine Anordnung des Tragarms in einem Winkel zwischen 0 und 60 Grad zur Vertikalen, besonders bevorzugt zwischen 10 und 50 Grad. Es hat sich konstruktiv als besonders günstig erwiesen, wenn die Tiefenführungsrollen zumindest teilweise unterhalb eines Geräterahmens 8 angeordnet sind.

Es wird ferner vorgeschlagen, dass die Radaufhängung einen im Wesentlichen symmetrischen Aufbau in Bezug auf eine sich entlang der Bearbeitungsrichtung erstreckende Symmetrieebene aufweist. Eine derartige Ausgestaltung erlaubt gleichmäßige Pendelbewegungen und somit eine effektive Kompensation von Bodenunebenheiten. Ferner kann sich ein solcher konstruktiver Aufbau als besonders wartungsfreundlich erweisen.

In einer weiteren vorteilhaften Weiterbildung der Erfindung weist das Bodenbearbeitungsgerät mehrere, quer zur Bearbeitungsrichtung nebeneinander angeordnete Radaufhängungen auf. Hierdurch lässt sich die Abstützung und Führung des Werkzeugrahmens weiter verbessern. Insbesondere kann die Anzahl der Radaufhängungen, und damit die Anzahl der Tiefenführungsräder, auf die Anzahl an nebeneinander angeordneten Bodenbearbeitungswerkzeugen angepasst sein.

In einer weiteren vorteilhaften Weiterbildung der Erfindung wird ein in Bearbeitungsrichtung hinter den Bodenbearbeitungswerkzeugen angeordnetes Bodenbearbeitungsaggregat zur Bodenbearbeitung innerhalb der Pflanzreihen vorgeschlagen. Ein solches Bodenbearbeitungsaggregat kann die Effektivität der Bodenbearbeitung verbessern. Insbesondere kann mit einem solchen Bodenbearbeitungsaggregat ein größerer Flächenanteil der Nutzfläche bearbeitet werden, woraus ein geringerer Nachbearbeitungsbedarf resultieren kann. Das Bodenbearbeitungsaggregat kann insbesondere mehrere Aggregatwerkzeuge aufweisen, welche zur Bodenbearbeitung zwischen den Nutzpflanzen ein und derselben Pflanzreihe quer zu der Pflanzreihe bewegbar sein können.

Weitere Vorteile und Einzelheiten der Erfindung werden nachfolgend anhand der beigefügten Zeichnungen eines Ausführungsbeispiels erläutert. Darin zeigen:
- Fig. 1: eine perspektivische Ansicht eines Bodenbearbeitungsgeräts, welches an eine landwirtschaftliche Zugmaschine angebaut ist;
- Fig. 2: eine Seitenansicht gemäß der Darstellung in Fig. 1;
- Fig. 3: eine ausschnittsweise Draufsicht auf das Bodenbearbeitungsgerät gemäß der Darstellung in Fig. 1;
- Fig. 4 und 5: zwei vergrößerte, teilweise geschnittene Seitenansichten des Bodenbearbeitungsgeräts gemäß der Darstellung in Fig. 2;
- Fig. 6: eine vergrößerte, perspektivische Ansicht einer Radaufhängung des Bodenbearbeitungsgeräts gemäß der Darstellung in Fig. 4 und 5, und
- Fig. 7 bis 12: verschiedene Detailansichten der Radaufhängung gemäß der Darstellung in Fig. 6.

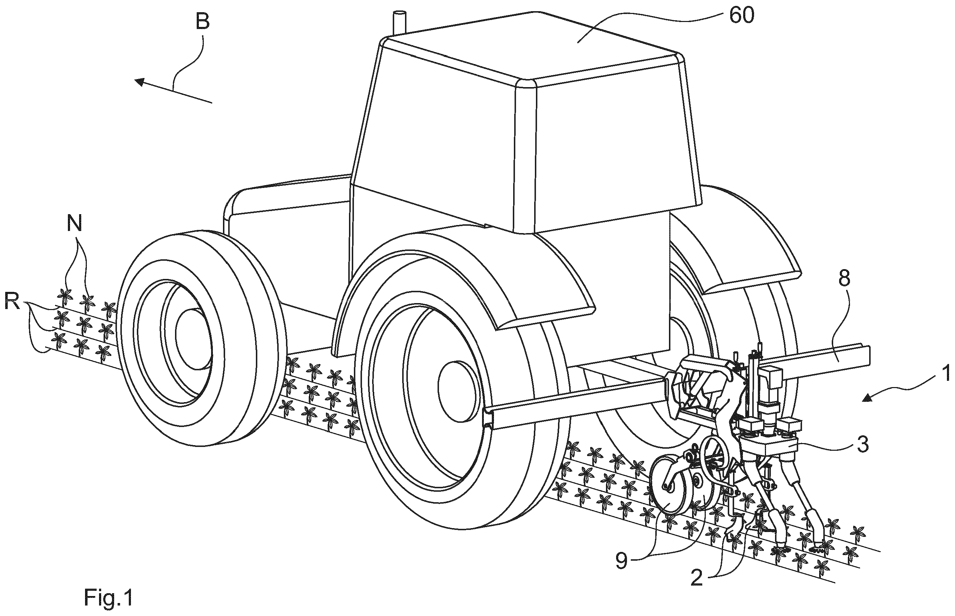

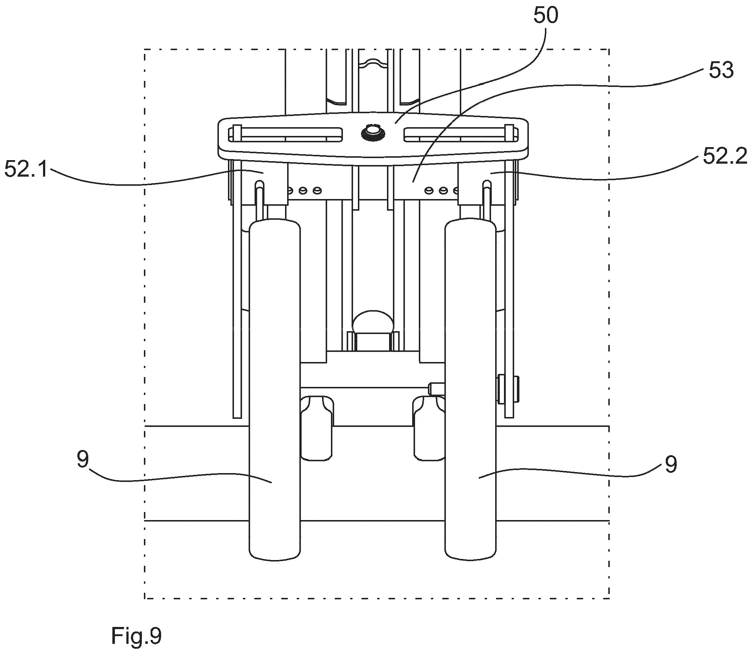

Die Darstellungen in den Fig. 1 bis 12 zeigen in verschiedenen Ansichten ein Bodenbearbeitungsgerät 1 zur Bodenbearbeitung zwischen in Pflanzreihen R angebauten Nutzpflanzen N.

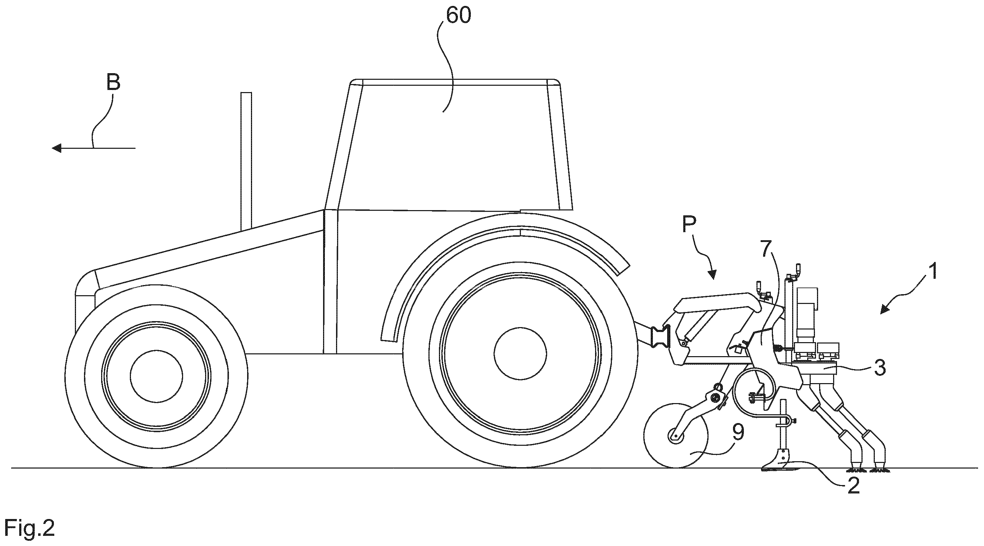

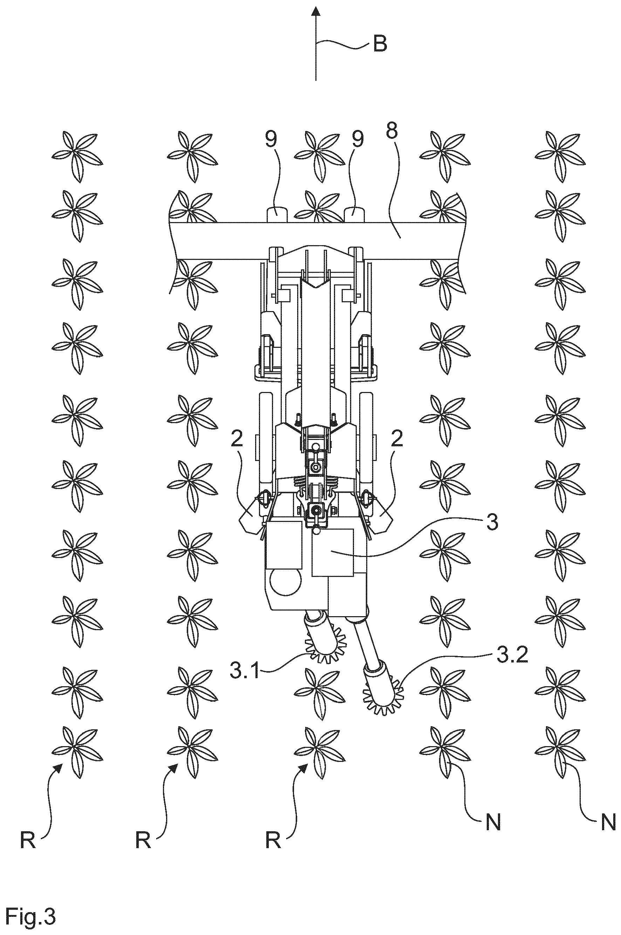

Das Bodenbearbeitungsgerät 1 weist mehrere Bodenbearbeitungswerkzeuge 2 auf, welche zwischen den Pflanzreihen R der Nutzpflanzen N in den Boden der Nutzfläche eingreifen, vgl. Fig. 1 und 3. Die Bodenbearbeitungswerkzeuge 2 sind an einem Werkzeugrahmen 7 angeordnet, welcher über zwei Tiefenführungsrollen 9 gegenüber dem Boden abgestützt ist, vgl. Fig.2. Zur Veranschaulichung sind gemäß den Darstellungen in Fig. 1 und 3 jeweils nur zwei Bodenbearbeitungswerkzeuge 2 an dem Bodenbearbeitungsgerät 1 dargestellt. Es versteht sich von selbst, dass in der Praxis in der Regel eine größere Anzahl an Bodenbearbeitungswerkzeugen 2 vorgesehen ist.

Zur Bodenbearbeitung wird das Bodenbearbeitungsgerät 1 von einer Zugmaschine 60 in Bearbeitungsrichtung B, welche in der Regel der Längsausrichtung der Pflanzreihen R entspricht, über die landwirtschaftliche Nutzfläche bewegt, vgl. Fig. 3. Das Bodenbearbeitungsgerät 1 ist über einen Geräterahmen 8 heckseitig an die Zugmaschine 60, gemäß der Darstellung in Fig. 1 und 2 ein Feldschlepper, angekuppelt. Das Bodenbearbeitungsgerät 1 kann je nach Anwendungsfall auch an der Frontseite oder auch zwischen den Achsen der Zugmaschine 60 angeordnet sein. Alternativ kann das Bodenbearbeitungsgerät 1 auch einen eigenen Fahrantrieb aufweisen und somit selbstfahrend ausgebildet sein. Ferner ist auch eine Ausgestaltung als ein automatisiert, insbesondere auch als ein autonom selbstfahrendes Bodenbearbeitungsgerät 1, denkbar. Darüber hinaus kann es vorteilhaft sein, das Bodenbearbeitungsgerät 1 nicht direkt an der Zugmaschine 60 anzukuppeln, sondern indirekt. So kann das etwa Bodenbearbeitungsgerät 1 an einem weiteren landwirtschaftlichen Arbeitsgerät angeordnet sein, welches seinerseits mit der Zugmaschine 60 verbunden ist.

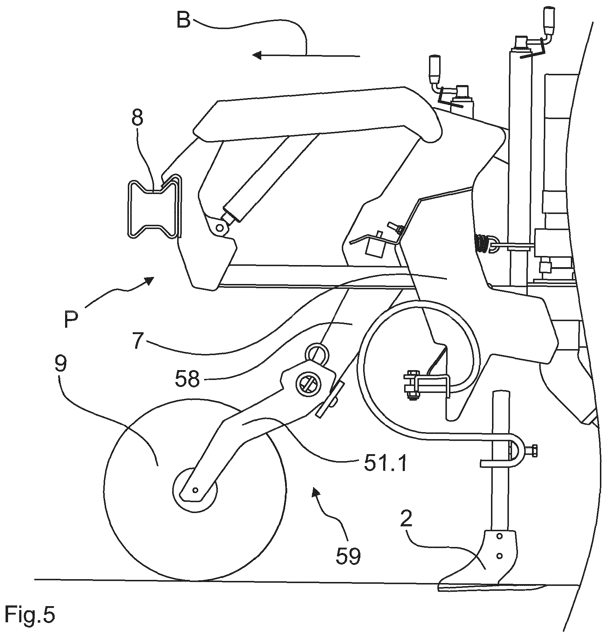

Die Tiefenführungsrollen 9 sind zum Ausgleich von Bodenunebenheiten gegenüber dem Werkzeugrahmen 7 verschwenkbar angeordnet, worauf im Folgenden anhand der Darstellungen in Fig. 2 und 5 eingegangen wird.

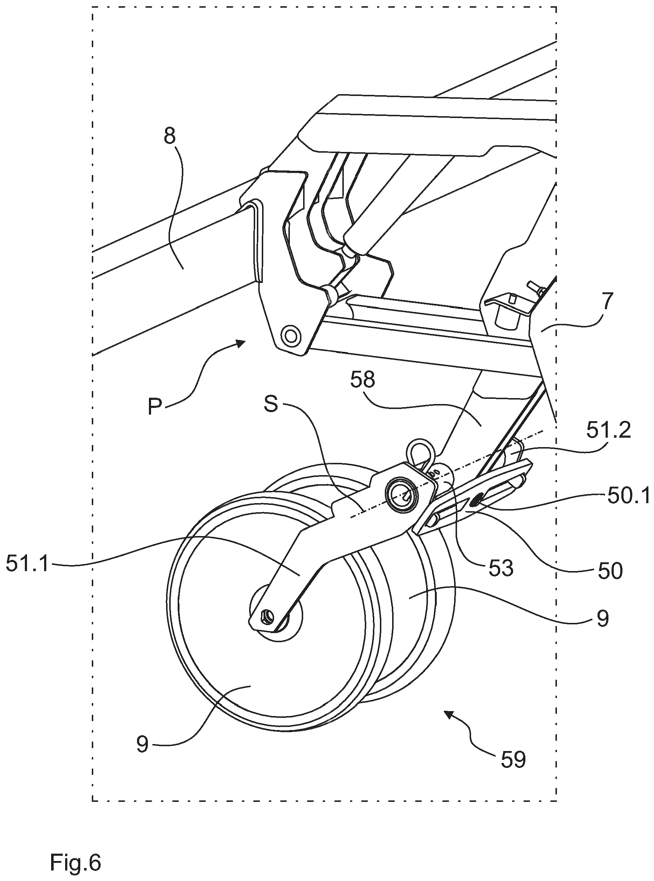

Die beiden benachbarten Tiefenführungsrollen 9 sind in Bearbeitungsrichtung B vor den Bodenbearbeitungswerkzeugen 2 angeordnet. Sie sind über eine gemeinsame Radaufhängung 59 an dem Werkzeugrahmen 7 befestigt, welche sich in Bearbeitungsrichtung B schräg zur Vertikalen erstreckt, vgl. Fig. 5. Zwischen der Vertikalen und einem als Doppelprofil ausgebildeten Tragarm 58 der Radaufhängung 59 wird ein spitzer Winkel eingeschlossen, vgl. ebenfalls Fig. 5. Der Tragarm 58 ist einseitig mit dem Werkzeugrahmen 7 verbunden und weist an seinem anderen Ende ein Achselement 53 auf, welches sich quer zu der Erstreckungsrichtung des Tragarms 58 erstreckt, vgl. Fig. 6.

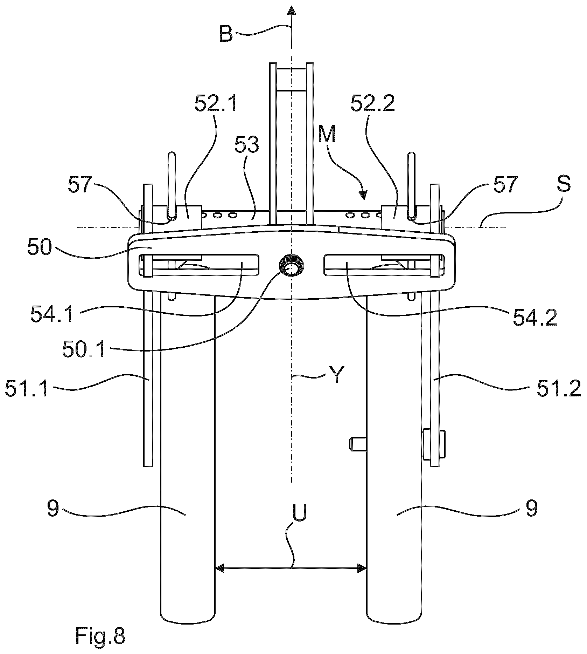

An dem Achselement 53 sind die beiden Tiefenführungsrollen 9 jeweils über einen Längslenker 51.1, 51.2 schwenkbar angeordnet, vgl. Fig. 6. Zu diesem Zweck ist jeweils eine an den Durchmesser des Achselements 53 angepasste Buchse 52.1, 52.2 an einem dem Tiefenführungsrad 9 entgegengesetzten Ende der Längslenker 51.1, 51.2 vorgesehen, welche auf das Achselement 53 aufgesteckt ist, vgl. Fig. 8. Durch die Schwenkbewegungen des Längslenkers 51.1, 51.2 um die Schwenkachse S können Bodenunebenheiten kompensiert werden. Die Schwenkachse S erstreckt sich dabei entlang des Achselements 53, quer zu der Bearbeitungsrichtung B, vgl. Fig. 2 und 6.

Bei dem erfindungsgemäßen Bodenbearbeitungsgerät sind zwei benachbarte Tiefenführungsrollen 9 über einen Wipphebel 50 mechanisch miteinander gekoppelt und gegenüber dem Werkzeugrahmen 7 pendelnd angeordnet. Nachfolgend wird zunächst anhand der Darstellungen in Fig. 6 bis 8 die Ausgestaltung und Funktion des Wipphebels 50 erläutert.

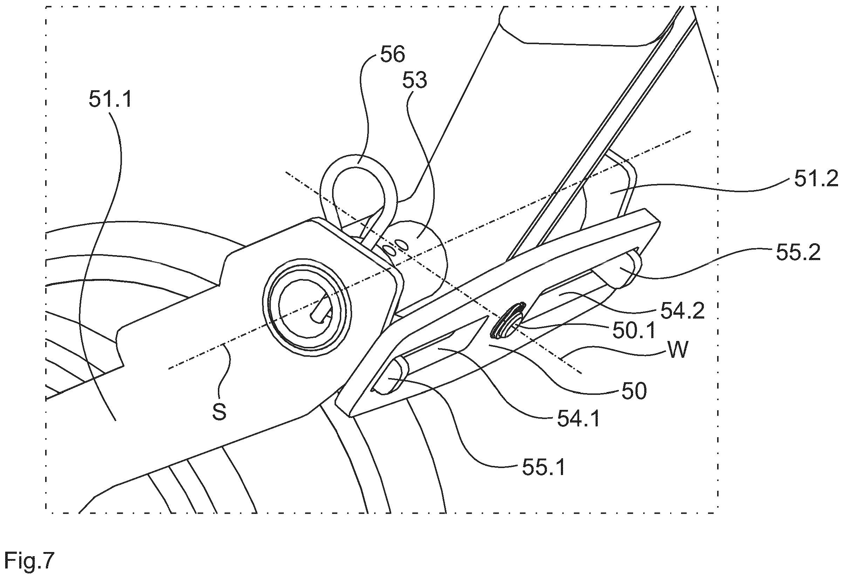

Anhand der Darstellungen in Fig. 7 und 8 ist zu erkennen, dass der Wipphebel 50 als längliches, flaches Bauelement mit zwei spiegelbildlich ausgebildeten Flügeln ausgeführt ist. Der Wipphebel 50 ist um eine durch dessen Mittelpunkt verlaufende Wippachse W wippend oder pendelnd an der Radaufhängung 59 angeordnet. Zur pendelnden Lagerung des Wipphebels 50 um die Wippachse W ist ein im Bereich des bodenseitigen Endes des Tragarms 58 angeordneter Drehpunkt 50.1 vorgesehen, an welchem der Wipphebel 50 mittig lösbar befestigt ist, vgl. Fig. 7.

Der Wipphebel 50 ist grundsätzlich ausgehend von der in Fig. 6 bis 8 dargestellten Neutralstellung, in welcher sich der Wipphebel 50 im Wesentlichen waagerecht erstreckt, sowohl im Uhrzeigersinn als auch im Gegenuhrzeigersinn um die Wippachse W drehbar angeordnet. Aufgrund der mechanischen Kopplung mit den Tiefenführungsrollen 9 sind die Drehbewegungen des Wipphebels 50 jedoch auf einen eingeschränkten Drehwinkelbereich begrenzt, welcher in der Regel deutlich geringer als ± 90 Grad, insbesondere deutlich geringer als ± 45 Grad ist.

Der Wipphebel 50 weist zwei sich radial von dessen Mittelpunkt erstreckenden Führungsausnehmungen 54.1, 54.2 auf, vgl. Fig. 8. Die Führungsausnehmungen 54.1, 54.2 sind als rechteckige, taschenartige Aussparungen ausgebildet, welche spiegelbildlich an den beiden Flügeln des Wipphebels 50 angeordnet sind.

Die mechanische Kopplung des Wipphebels 50 mit den Tiefenführungsrollen 9, welche deren pendelnde Anordnung ermöglicht, wird nachfolgend anhand der Darstellung in Fig. 7 erläutert. Wie vorstehend bereits beschrieben, sind die Tiefenführungsrollen 9 jeweils an einem Längslenker 51.1, 51.2 angeordnet. Die Längslenker 51.1, 51.2, welche als mehrfach abgewinkelte Bauteile ausgebildet sind, sind über die Buchsen 52.1, 52.2 um die Schwenkachse S schwenkbar an dem Achselement 53 gelagert. Die Buchsen 52.1, 52.2 sind einstückig mit den Längslenkern 51.1, 51.2 verbunden. Alternativ können diese auch mehrstückig als separate Bauteile ausgeführt sein.

Die Längslenker 51.1, 51.2 weisen jeweils einen Führungsvorsprung 55.1, 55.2 auf, vgl. Fig. 7. Die Führungsvorsprünge 55.1, 55.2 erstrecken sich als im Wesentlichen rechteckige, nasenartige Projektionen an den der jeweiligen Tiefenführungsrolle 9 abgewandten Enden der Längslenker 51.1, 51.2. Die Führungsvorsprünge 55.1, 55.2 greifen jeweils in eine Führungsausnehmung 54.1, 54.2 des Wipphebels 50 ein, vgl. Fig. 7. Die Breite der Führungsvorsprünge 55.1, 55.2 korrespondiert mit der Höhe der Führungsausnehmungen 54.1, 54.2. Aufgrund des Eingriffs der Führungsvorsprünge 55.1, 55.2 in die Führungsausnehmungen 54.1, 54.2 sind die beiden Längslenker 51.1, 51.2 über den Wipphebel 50 miteinander gekoppelt. Eine Schwenkbewegung des einen Längslenkers 51.1 wird über den Wipphebel 50 in eine betragsgleiche, gegensinnige Bewegung des anderen Längslenkers 51.2 übertragen. Da Gleiches auch in umgekehrter Richtung gilt, ergibt sich eine pendelnde Anordnung um die Wippachse W.

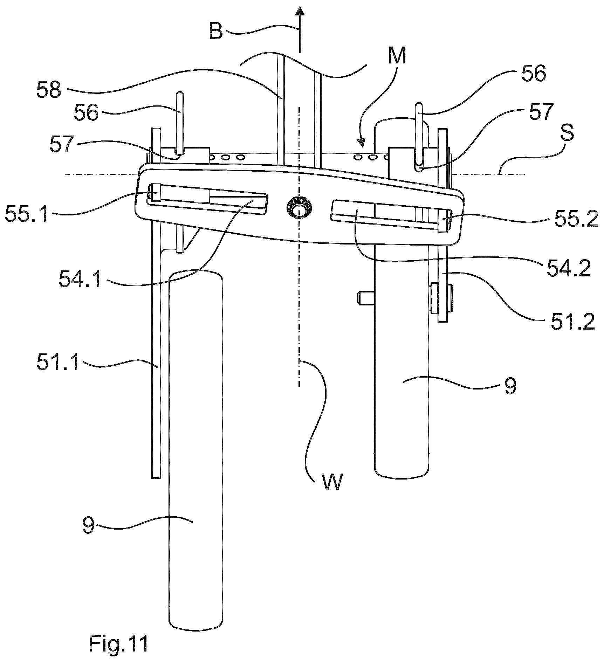

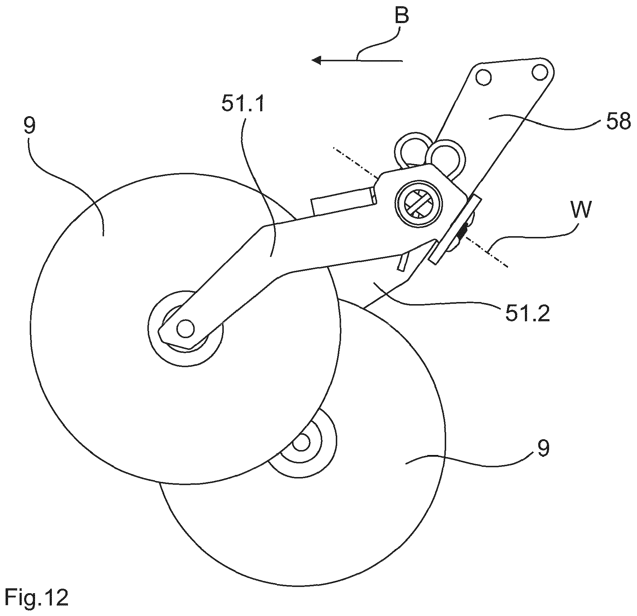

Die Darstellungen in den Fig. 11 und 12 zeigen die Radaufhängung 59 in zwei beispielhaften Betriebszuständen. In der Darstellung gem. Fig. 11 ist der rechte Längslenker 51.2 mit dem rechten Tiefenführungsrad 9 entgegen der Nutzfläche um die Schwenkachse S nach oben verschwenkt, beispielsweise aufgrund einer Bodenunebenheit. Über den Führungsvorsprung 55.2 und die Führungsausnehmung 54.2 ist der Wipphebel 50 um die Wippachse W um einen gewissen Winkel im Uhrzeigersinn aus der Neutralstellung verschwenkt. Auf der gegenüberliegenden Seite ist der Längslenker 51.1 und das damit gekoppelte Tiefenführungsrad 9 entsprechend der Kopplung der Führungsausnehmung 54.1 mit dem Führungsvorsprung 55.1 in Richtung der Nutzfläche nach unten verschwenkt. Die Darstellung in Fig. 12 zeigt den entgegengesetzten Fall, bei welchem der Längslenker 51.1 entgegen der Nutzfläche um die Schwenkachse S nach oben verschwenkt ist und der Längslenker 51.2 entsprechend nach unten. Die beiden Längslenker 51.1, 51.2 pendeln zwischen den beiden Betriebszuständen gemäß den Darstellungen in Fig. 11 und 12.

Die Längslenker 51.1, 51.2 sind über die Buchsen 52.1, 52.2 mit jeweils einem Arretierelement 56 entlang der Schwenkachse S axial unbeweglich und zugleich um die Schwenkachse S drehbar an dem Achselement 53 arretiert, vgl. Fig. 7 und 8. Das Arretierelement 56 ist als Federstecker, Splint oder entsprechendes Bolzenelement ausgebildet, welcher korrespondierende Ausnehmungen sowohl an der Buchse 52.1, 52.2 als auch dem Achselement 53 durchgreift. Die Größe der Ausnehmungen ist in axialer Richtung an den Durchmesser des Arretierelements 56 angepasst, woraus eine axiale Fixierung resultiert. In radialer Richtung sind die Ausnehmungen der Buchsen 52.1, 52.2 jedoch länglich ausgebildet, so dass den Buchsen 52.1, 52.2 gewisse Schwenk- bzw. Drehbewegungen um die Schwenkachse S erlaubt werden können.

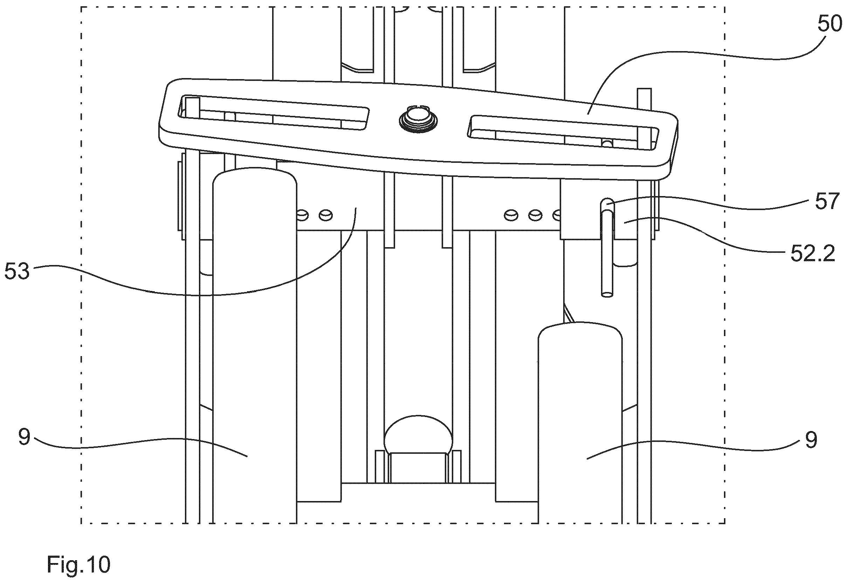

Die Schwenkbewegungen der Buchsen 52.1, 52.2 sind durch an den Ausnehmungen vorgesehene Schwenkanschläge 57 begrenzbar, vgl. Fig. 10. Wie dies etwa in der Darstellung gemäß Fig. 11 anhand des linken Längslenkers 51.1 erkannt werden kann, wirkt das Arretierelement 56 mit dem Schwenkanschlag 57 zusammen. Entsprechende Schwenkanschläge 57 können für beide Schwenkrichtungen vorgesehen sein. Während der Schwenkbewegungen der Längslenker 51.1, 51.2 ist das jeweilige Arretierelement 56 in den Ausnehmungen geführt.

Der durch die Schwenkanschläge 57 für Schwenkbewegungen der Buchsen 52.1, 52.2 zur Verfügung stehende Schwenkweg wird infolge der Erfindung doppelt so effizient ausgenutzt wie im Stand der Technik bisher bekannt. Durch die betragsgleiche, gegensinnige Bewegung des einen Längslenkers 51.1 bei einer Schwenkbewegung des anderen Längslenkers 51.2 ist zur Überwindung eines Hindernisses im Vergleich zu einer nicht gekoppelten Anordnung der Tiefenführungsrollen 9 nur der halbe Schwenkweg zurück-zulegen. Dies ist dadurch bedingt, dass sich die zur Überwindung des Hindernisses erforderliche Höhendifferenz zu gleichen Teilen auf Schwenkbewegungen der Längslenker 51.1, 51.2 der ausweichenden Tiefenführungsrolle 9 wie der nicht ausweichenden Tiefenführungsrolle 9 aufteilen. Anders gesagt können bei einem gegebenen durch die Schwenkanschläge 57 für Schwenkbewegungen der Buchsen 52.1, 52.2 zur Verfügung stehenden Schwenkweg infolge der Erfindung doppelt so hohe Hindernisse überwunden werden.

Die Längslenker 51.1, 51.2 sind zur Einstellung der Spurweite U der benachbarten Tiefenführungsrollen 9 relativ zu dem Achselement 53 bewegbar angeordnet, was nachfolgend anhand der Darstellung in Fig. 8 bis 10 erläutert wird.

Ausgehend von einer maximalen Spurweite U, wie sie in Fig. 8 bis 10 dargestellt ist, lassen sich die Längslenker 51.1, 51.2 manuell aufeinander zu bewegen. Hierbei wird die jeweilige Buchsen 52.1, 52.2 gegenüber dem Achselement 53 axialverschoben, wodurch sich die Spurweite U verringern lässt. Die mit den Führungsvorsprüngen 55.1, 55.2 zusammenwirkenden Führungsausnehmungen 54.1, 54.2 dienen als Führungen bei der Einstellung der Spurweite U.

Die Spurweite U ist im vorliegenden Ausführungsbeispiel stufenweise einstellbar. Wie dies der Fig. 8 entnommen werden kann, ist ein Lochmuster M an dem Achselement 53 angeordnet, welches die verschiedenen einstellbaren Spurweiten U definiert. Durch Fixieren des Arretierelements 56 in den unterschiedlichen Bohrungen des Lochmusters M lassen sich verschiedene Spurweiten U realisieren. Die Spurweiten U können auf die Pflanzreihen R abgestimmt sein. Insbesondere kann die Spurweite U so gewählt und eingestellt werden, dass die Nutzpflanzen N bei der Überfahrt mit dem Bodenbearbeitungsgerät 1 nicht beschädigt werden.

Den Darstellungen gemäß Fig. 8 bis 10 ist ferner zu entnehmen, dass die Radaufhängung 59 einen symmetrischen Grundaufbau in Bezug auf eine sich entlang der Bearbeitungsrichtung B erstreckende Symmetrieebene Y aufweist. Die Längslenker 51.1, 51.2 sind dabei jeweils außenseitig mit der Nabe der jeweiligen Tiefenführungsrolle 9 gekoppelt. Es ist ferner zu erkennen, dass sich die Wippachse W des Wipphebels 50 im Wesentlichen in Bearbeitungsrichtung B erstreckt und durch die Symmetrieebene Y verläuft. Es wird dabei ein spitzer Winkel zwischen der Wippachse W und der Bearbeitungsrichtung B eingeschlossen, vgl. Fig. 12.

In einer in Fig. 7 und 8 dargestellten Neutralstellung erstreckt sich der Wipphebel 50 im Wesentlichen parallel zu der Schwenkachse S. Er ist dabei parallel zu dem Achselement 53 angeordnet. In Fig. 7 ist ferner dargestellt, dass die Schwenkachse S und die Wippachse W orthogonal zueinander verlaufen.

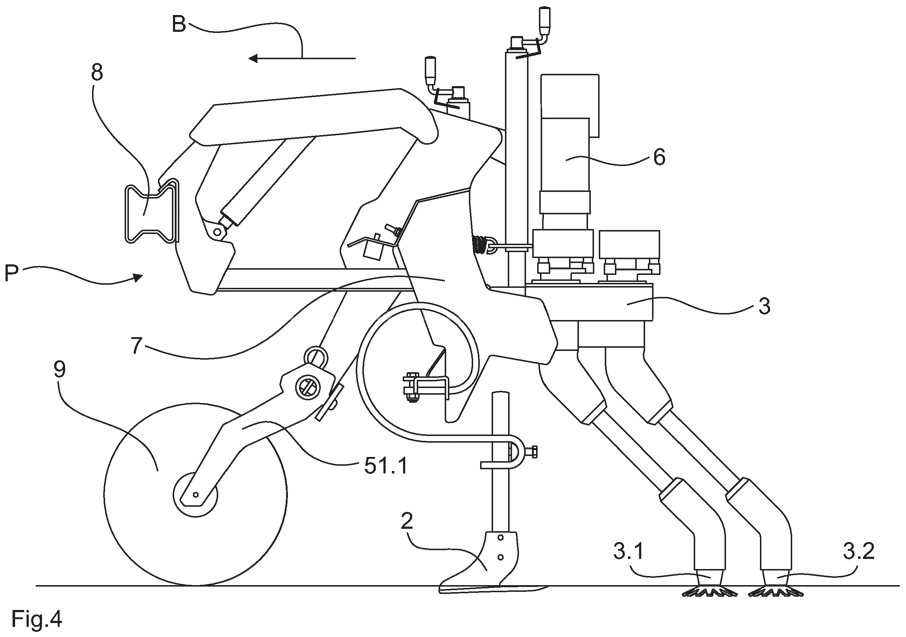

Im Folgenden wird unter Verweis auf die Darstellungen in Fig. 1 und 4 auf weitere konstruktive Besonderheiten des Bodenbearbeitungsgeräts 1 Bezug genommen. Das Bodenbearbeitungsgerät 1 weist neben den starren, zinkenartigen Bodenbearbeitungswerkzeugen 2 zur Bodenbearbeitung zwischen den Pflanzreihen R auch ein Bodenbearbeitungsaggregat 3 zur Bodenbearbeitung zwischen den Nutzpflanzen N einer Pflanzreihe R auf.

Das Bodenbearbeitungsaggregat 3 ist dabei modulartig aufgebaut und bildet eine bauliche Einheit, welche auch an bestehenden Bodenbearbeitungsgeräten 1, beispielsweise am Werkzeugrahmen 7, nachgerüstet werden kann.

Das Bodenbearbeitungsaggregat 3 umfasst zwei Aggregatwerkzeuge 3.1, 3.2, welche - wie die Bodenbearbeitungswerkzeuge 2 - ebenfalls zum Eingriff in den Boden der Nutzfläche ausgebildet sind. Die Aggregatwerkzeuge 3.1, 3.2 sind gemäß der Darstellung in Fig. 4 scheibenartig und sternförmig ausgebildet. Es handelt sich hierbei um rotierend angetriebene Aggregatwerkzeuge 3.1, 3.2, welche über einen entsprechenden, an dem Bodenbearbeitungsaggregat 3 angeordneten Werkzeugantrieb 6 angetrieben werden. Im Unterschied zu den zwischen den einzelnen Pflanzreihen R arbeitenden Bodenbearbeitungswerkzeugen 2 sind die Aggregatwerkzeuge 3.1, 3.2 zur Bearbeitung des Bodens zwischen den einzelnen Nutzpflanzen N ein und derselben Pflanzreihe R ausgebildet. Zu diesem Zweck sind die Aggregatwerkzeuge 3.1, 3.2 quer zu den Pflanzreihen R bewegbar an dem Bodenbearbeitungsaggregat 3 angeordnet. Die Aggregatwerkzeuge 3.1, 3.2 können bedarfsweise jeweils hinter einer Nutzpflanze N in die Pflanzreihe R bewegt und vor der nächsten Nutzpflanze N derselben Pflanzreihe R aus der Pflanzreihe R herausbewegt werden. Hierdurch kann der Boden zwischen benachbarten Nutzpflanzen N einer Pflanzreihe R bearbeitet werden, ohne dass die Nutzpflanzen N beschädigt werden.

Den Darstellungen in Fig. 5 und 6 ist ferner zu entnehmen, dass der Werkzeugrahmen 7 über eine Parallelogramm-Aufhängung P an dem Werkzeugrahmen 7 angeordnet ist, welche eine Parallelführung der daran angeordneten Bodenbearbeitungswerkzeuge 2 sowie des Bodenbearbeitungsaggregats 3 ermöglicht.

In der landwirtschaftlichen Praxis ist in der Regel nicht nur eine Radaufhängung 59 an dem Bodenbearbeitungsgerät 1 vorgesehen, sondern mehrere, quer zu der Bearbeitungsrichtung B nebeneinander angeordnete Radaufhängungen 59. Auch die Anzahl der nebeneinander angeordneten Bodenbearbeitungswerkzeuge 2 und Bodenbearbeitungsaggregate 3, die an einem Bodenbearbeitungsgerät 1 angeordnet sind, ist in der Regel - im Unterschied zu den zu Veranschaulichungszwecken vereinfachten Darstellungen in Fig. 1 und 3 - erhöht. Sie entspricht in der Regel der Anzahl der in einem Arbeitsgang, d. h. bei einer Überfahrt, behandelbaren Pflanzreihen R.

Das vorstehend beschriebene Bodenbearbeitungsgerät 1 zeichnet sich dadurch aus, dass dieses jederzeit eine stabile Fahrlage aufweist, bei welcher ein Verlust des Bodenkontakts durch die Tiefenführungsrollen 9 zuverlässig vermieden werden kann, woraus eine gleichmäßigere Bodenbearbeitung resultiert.

### Bezugszeichen:

- 1: Bodenbearbeitungsgerät
- 2: Bodenbearbeitungswerkzeug
- 3: Bodenbearbeitungsaggregat
- 3.1: Aggregatwerkzeug
- 3.2: Aggregatwerkzeug
- 6: Werkzeugantrieb
- 7: Werkzeugrahmen
- 8: Geräterahmen
- 9: Tiefenführungsrolle

- 50: Wipphebel
- 50.1: Drehpunkt
- 51.1: Längslenker
- 51.2: Längslenker
- 52.1: Buchse
- 52.2: Buchse
- 53: Achselement
- 54.1: Führungsausnehmung
- 54.2: Führungsausnehmung
- 55.1: Führungsvorsprung
- 55.2: Führungsvorsprung
- 56: Arretierelement
- 57: Schwenkanschlag
- 58: Tragarm
- 59: Radaufhängung

- 60: Zugmaschine

- B: Bearbeitungsrichtung
- M: Lochmuster
- N: Nutzpflanze
- P: Parallelogramm-Aufhängung
- R: Pflanzreihe
- S: Schwenkachse
- U: Spurweite
- W: Wippachse
- Y: Symmetrieebene

## Patentansprüche

1. Bodenbearbeitungsgerät zur Bodenbearbeitung zwischen in Pflanzreihen (R) angebauten Nutzpflanzen (N) mit mehreren an einem Werkzeugrahmen (7) angeordneten, entlang einer Bearbeitungsrichtung (B) zwischen den Pflanzreihen (R) in den Boden eingreifenden Bodenbearbeitungswerkzeugen (2), wobei der Werkzeugrahmen (7) über mehrere Tiefenführungsrollen (9) gegenüber dem Boden abgestützt ist und die Tiefenführungsrollen (9) zum Ausgleich von Bodenunebenheiten gegenüber dem Werkzeugrahmen (7) verschwenkbar angeordnet sind,
**dadurch gekennzeichnet,**
**dass** zwei benachbarte Tiefenführungsrollen (9) über einen Wipphebel (50) mechanisch miteinander gekoppelt und gegenüber dem Werkzeugrahmen (7) pendelnd angeordnet sind.

2. Bodenbearbeitungsgerät nach Anspruch 1, **dadurch gekennzeichnet, dass** die Tiefenführungsrollen (9) zur Kompensation von Bodenunebenheiten um eine sich quer zur Bearbeitungsrichtung erstreckende Schwenkachse (S) schwenkbar an dem Werkzeugrahmen (7) befestigt sind.

3. Bodenbearbeitungsgerät nach einem der Ansprüche 1 oder 2, **dadurch gekennzeichnet, dass** der Wipphebel (50) als zweiseitiger Hebel ausgebildet ist, welcher um eine sich quer zu der Schwenkachse (S) erstreckende Wippachse (W) pendelnd gelagert ist.

4. Bodenbearbeitungsgerät nach einem der vorhergehenden Ansprüche, **dadurch gekennzeichnet, dass** die Tiefenführungsrollen (9) jeweils an einem um die Schwenkachse (S) schwenkbaren Längslenker (51.1, 51.2) befestigt sind.

5. Bodenbearbeitungsgerät nach Anspruch 4, **dadurch gekennzeichnet, dass** der Längslenker (51.1, 51.2) eine Buchse (52.1, 52.2) aufweist, welche um ein sich in Richtung der Schwenkachse (S) erstreckendes Achselement (53) drehbar gelagert ist.

6. Bodenbearbeitungsgerät nach einem der vorhergehenden Ansprüche, **dadurch gekennzeichnet, dass** der Wipphebel (50) mit den Längslenkern (51.1, 51.2) gekoppelt ist.

7. Bodenbearbeitungsgerät nach Anspruch 6, **dadurch gekennzeichnet, dass** der Wipphebel (50) zwei sich radial zur Wippachse (W) erstreckende Führungsausnehmungen (54.1, 54.2) zur Führung jeweils eines, insbesondere korrespondierenden Führungsvorsprungs (55.1, 55.2) der Längslenker (51.1, 51.2) aufweist.

8. Bodenbearbeitungsgerät nach einem der vorhergehenden Ansprüche, **dadurch gekennzeichnet, dass** die Längslenker (51.1, 51.2) zur Einstellung einer Spurweite (U) der Tiefenführungsrollen (9) entlang der Schwenkachse (S) relativ zu dem Achselement (53) bewegbar sind.

9. Bodenbearbeitungsgerät nach Anspruch 6, **dadurch gekennzeichnet, dass** die Buchse (52.1, 52.2) mit einem Arretierelement (56) entlang der Schwenkachse (S) axial unbeweglich und zugleich um die Schwenkachse (S) drehbar an dem Achselement (53) arretierbar ist.

10. Bodenbearbeitungsgerät nach einem der Ansprüche 6 oder 9, **dadurch gekennzeichnet, dass** die Buchse (52.1, 52.2) zur Einstellung der Spurweite (U) in verschiedenen Arretierstellungen an dem Achselement (53) arretierbar ist.

11. Bodenbearbeitungsgerät nach einem der Ansprüche 6 oder 9 bis 10, **dadurch gekennzeichnet, dass** die Buchse (52.1, 52.2) einen mit dem Arretierelement (56) zusammenwirkenden Schwenkanschlag (57) zur Begrenzung der Schwenkbewegungen des Längslenkers (51.1, 51.2) aufweist.

12. Bodenbearbeitungsgerät nach einem der vorhergehenden Ansprüche, **dadurch gekennzeichnet, dass** das Achselement (53) an einem Tragarm (58) angeordnet ist.

13. Bodenbearbeitungsgerät nach einem der vorhergehenden Ansprüche, **dadurch gekennzeichnet, dass** der Wipphebel (50) in der Neutralstellung parallel zu dem Achselement (53) angeordnet ist.

14. Bodenbearbeitungsgerät nach einem der vorhergehenden Ansprüche, **dadurch gekennzeichnet, dass** jeweils zwei Tiefenführungsrollen (9) über eine gemeinsame Radaufhängung (59) an dem Werkzeugrahmen (7) angeordnet sind.

15. Bodenbearbeitungsgerät nach Anspruch 14, **dadurch gekennzeichnet, dass** die Radaufhängung (59) einen im Wesentlichen symmetrischen Aufbau in Bezug auf eine sich entlang der Bearbeitungsrichtung (B) erstreckende Symmetrieebene (Y) aufweist.

## Claims

1. Soil-cultivating device for cultivating the soil between crop plants (N) grown in plant rows (R), comprising a plurality of soil-cultivating tools (2) arranged on a tool frame (7) and engaging in the soil between the plant rows (R) in a cultivation direction (B), the tool frame (7) being supported against the soil via a plurality of depth guidance rollers (9) and the depth guidance rollers (9) being arranged so as to be tiltable relative to the tool frame (7) in order to compensate for soil unevenness,
**characterized in that**
two adjacent depth guidance rollers (9) are mechanically coupled to each other via a rocker lever (50) and are arranged so as to oscillate relative to the tool frame (7).

2. Soil-cultivating device according to claim 1, **characterized in that** the depth guidance rollers (9) are attached to the tool frame (7) so as to be pivotable about a pivot axis (S) extending transversely to the cultivation direction in order to compensate for soil unevenness.

3. Soil-cultivating device according to either of claims 1 and 2, **characterized in that** the rocker lever (50) is designed as a two-sided lever which is mounted so as to oscillate about a rocker axis (W) extending transversely to the pivot axis (S).

4. Soil-cultivating device according to any of the preceding claims, **characterized in that** the depth guidance rollers (9) are each attached to a leading link (51.1, 51.2) which is pivotable about the pivot axis (S).

5. Soil-cultivating device according to claim 4, **characterized in that** the leading link (51.1, 51.2) has a bushing (52.1, 52.2) which is mounted so as to be rotatable about an axle element (53) extending in the direction of the pivot axis (S).

6. Soil-cultivating device according to any of the preceding claims, **characterized in that** the rocker lever (50) is coupled to the leading links (51.1, 51.2).

7. Soil-cultivating device according to claim 6, **characterized in that** the rocker lever (50) has two guide cutouts (54.1, 54.2), extending radially to the rocker axis (W), for guiding one guide projection (55.1, 55.2), in particular a corresponding guide projection, of the leading links (51.1, 51.2) each.

8. Soil-cultivating device according to any of the preceding claims, **characterized in that** the leading links (51.1, 51.2) are movable, relative to the axle element (53), along the pivot axis (S) in order to adjust a track width (U) between the depth guidance rollers (9).

9. Soil-cultivating device according to claim 6, **characterized in that** the bushing (52.1, 52.2) is lockable on the axle element (53) by a locking element (56) so as to be axially immovable along the pivot axis (S) and at the same time rotatable about the pivot axis (S).

10. Soil-cultivating device according to either of claims 6 and 9, **characterized in that** the bushing (52.1, 52.2) is lockable in different locking positions on the axle element (53) in order to adjust the track width (U).

11. Soil-cultivating device according to any of claims 6 and 9 and 10, **characterized in that** the bushing (52.1, 52.2) has a pivot stop (57), interacting with the locking element (56), for limiting the pivot movements of the leading link (51.1, 51.2).

12. Soil-cultivating device according to any of the preceding claims, **characterized in that** the axle element (53) is arranged on a bearing arm (58).

13. Soil-cultivating device according to any of the preceding claims, **characterized in that** in the neutral position the rocker lever (50) is arranged parallel to the axle element (53).

14. Soil-cultivating device according to any of the preceding claims, **characterized in that** in each case two depth guidance rollers (9) are arranged on the tool frame (7) via one common wheel suspension (59).

15. Soil-cultivating device according to claim 14, **characterized in that** the wheel suspension (59) has a substantially symmetrical structure with respect to a symmetry plane (Y) extending in the cultivation direction (B).

## Revendications

1. Appareil de travail du sol pour le travail du sol entre des plantes utiles (N) cultivées en rangées de plantes (R), comportant plusieurs outils de travail du sol (2) disposés sur un châssis d'outils (7) et venant en prise dans le sol le long d'une direction de travail (B) entre les rangées de plantes (R), dans lequel le châssis d'outils (7) est soutenu par rapport au sol par l'intermédiaire de plusieurs galets de guidage en profondeur (9) et les galets de guidage en profondeur (9) sont disposés de manière à pouvoir pivoter par rapport au châssis d'outils (7) pour compenser des inégalités du sol,
**caractérisé en ce**
**que** deux galets de guidage en profondeur (9) voisins sont accouplés mécaniquement l'un à l'autre par l'intermédiaire d'un levier à basculement (50) et sont disposés de manière pendulaire par rapport au châssis d'outils (7).

2. Appareil de travail du sol selon la revendication 1, **caractérisé en ce que** les galets de guidage en profondeur (9) sont fixés au châssis d'outils (7) de manière à pouvoir pivoter autour d'un axe de pivotement (S) s'étendant transversalement à la direction de travail pour compenser des inégalités du sol.

3. Appareil de travail du sol selon l'une des revendications 1 ou 2, **caractérisé en ce que** le levier à basculement (50) est réalisé sous la forme d'un levier à deux côtés qui est monté de manière pendulaire autour d'un axe de basculement (W) s'étendant transversalement à l'axe de pivotement (S).

4. Appareil de travail du sol selon l'une des revendications précédentes, **caractérisé en ce que** les galets de guidage en profondeur (9) sont respectivement fixés à un bras oscillant longitudinal (51.1, 51.2) de manière à pouvoir pivoter autour de l'axe de pivotement (S).

5. Appareil de travail du sol selon la revendication 4, **caractérisé en ce que** le bras oscillant longitudinal (51.1, 51.2) présente une douille (52.1, 52.2) qui est montée de manière à pouvoir tourner autour d'un élément formant essieu (53) s'étendant dans la direction de l'axe de pivotement (S).

6. Appareil de travail du sol selon l'une des revendications précédentes, **caractérisé en ce que** le levier à basculement (50) est accouplé aux bras oscillants longitudinaux (51.1, 51.2).

7. Appareil de travail du sol selon la revendication 6, **caractérisé en ce que** le levier à basculement (50) présente deux évidements de guidage (54.1, 54.2) s'étendant radialement par rapport à l'axe de basculement (W) et permettant de guider respectivement une saillie de guidage (55.1, 55.2), en particulier correspondante, des bras oscillants longitudinaux (51.1, 51.2).

8. Appareil de travail du sol selon l'une des revendications précédentes, **caractérisé en ce que** les bras oscillants longitudinaux (51.1, 51.2) sont mobiles le long de l'axe de pivotement (S) par rapport à l'élément formant essieu (53) pour le réglage d'une largeur de voie (U) des galets de guidage en profondeur (9).

9. Appareil de travail du sol selon la revendication 6, **caractérisé en ce que** la douille (52.1, 52.2) peut être bloquée sur l'élément formant essieu (53) par un élément de blocage (56) de manière à ne pas être mobile axialement le long de l'axe de pivotement (S) et en même temps de manière à pouvoir tourner autour de l'axe de pivotement (S).

10. Appareil de travail du sol selon l'une des revendications 6 ou 9, **caractérisé en ce que** la douille (52.1, 52.2) peut être bloquée dans différentes positions de blocage sur l'élément formant essieu (53) pour le réglage de la largeur de voie (U).

11. Appareil de travail du sol selon l'une des revendications 6 ou 9 à 10, **caractérisé en ce que** la douille (52.1, 52.2) présente une butée de pivotement (57) coopérant avec l'élément de blocage (56) pour limiter les mouvements de pivotement du bras oscillant longitudinal (51.1, 51.2).

12. Appareil de travail du sol selon l'une des revendications précédentes, **caractérisé en ce que** l'élément formant essieu (53) est disposé sur un bras porteur (58).

13. Appareil de travail du sol selon l'une des revendications précédentes, **caractérisé en ce que** le levier à basculement (50) est disposé parallèlement à l'élément formant essieu (53) dans la position neutre.

14. Appareil de travail du sol selon l'une des revendications précédentes, **caractérisé en ce que** respectivement deux galets de guidage en profondeur (9) sont disposés sur le châssis d'outils (7) par l'intermédiaire d'une suspension de roue (59) commune.

15. Appareil de travail du sol selon la revendication 14, **caractérisé en ce que** la suspension de roue (59) présente une structure sensiblement symétrique par rapport à un plan de symétrie (Y) s'étendant le long de la direction de travail (B).
